# EUROPEAN PATENT APPLICATION

(11) **EP 2 336 505 A2**
(43) Date of publication of application: **22.06.2011**
(21) Application number: 10191989.2
(22) Date of filing: 19.11.2010
(51) Int. Cl.: F01D 25/18, F01D 25/20, F02C 7/06, F01M 1/10

(54) **Lubricant supply filtration system**

(30) Priority: 17.12.2009 US 640830
(71) Applicant: Honeywell International Inc., Morristown, NJ 07962 (US)
(72) Inventor: Payne, David A., Morristown, NJ 07962-2245 (US); Fowlkes, Monta, Morristown, NJ 07962-2245 (US)
(74) Representative: Buckley, Guy Julian

(57) **Abstract**

A system and method of filtering lubricant in a lubricant supply system are provided. Lubricant from a lubricant source (102) is directed into and through a coarse filter (124) that is configured to remove, from the lubricant, particulate of at least a first dimension. A fraction of the lubricant discharged from the coarse filter (124) is directed into and through a fine filter (126) that is configured to remove, from the fraction of lubricant, particulate having at least a second dimension that is less than the first dimension. Lubricant discharged from the fine filter (126) is directed back to the lubricant source (102).

## Description

### TECHNICAL FIELD

The present invention generally relates to rotating machine lubrication and, more particularly, to a system and method for supplying filtered lubricant to one or more rotating machines.

### BACKGROUND

Rotating machines, such as aircraft gas turbine engines, are typically supplied with lubricant from a lubricant supply system. A typical lubricant supply system includes one or more pumps that draw lubricant from a lubricant reservoir, and increase the pressure of the lubricant. The lubricant is then delivered, via an appropriate piping circuit, to the machine. Over time, particulate or other debris may contaminate the lubricant. Thus, many lubricant supply systems also include one or more filters to remove particulate or other debris from the lubricant.

Currently known lubricant filtration systems and methods can present a conflict. Specifically, a relatively fine filter is desired in order to remove relatively small (approximately less than 3 microns) contaminants. However, a relatively coarse filter is also desired to prevent relatively high lubricant supply system pressures that can result from the pressure drop across the system filters. Moreover, having the ability to remove relatively small size contaminants from the lubricant has been shown to greatly improve the operating life of various components (e.g., bearings, seals, shafts, gears, etc.) within rotating machines.

Hence, there is a need for a system and method of removing relatively fine contaminants from a lubricant supply system, while not causing an undesirable increase in lubricant supply system pressures or reducing normal maintenance intervals. The present invention addresses at least this need.

### BRIEF SUMMARY

In one exemplary embodiment, a lubricant supply system includes a lubricant supply line, a coarse filter, a recirculation line, and a fine filter. The lubricant supply line is adapted to receive lubricant from a lubricant source and direct the received lubricant to a machine. The coarse filter is disposed in series in the lubricant supply line and is configured to remove, from the lubricant supplied to the lubricant supply line, particulate of at least a first dimension. The recirculation line has a fluid inlet coupled to the lubricant supply line downstream of the coarse filter and a fluid outlet in fluid communication with the lubricant source. The recirculation line is configured to direct a fraction of the lubricant supplied to the lubricant supply line back to the lubricant source. The fine filter is disposed in series in the recirculation line and is configured to remove, from the lubricant in the recirculation line, particulate having at least a second dimension. The second dimension is less than the first dimension.

In another exemplary embodiment, a lubricant supply system includes a lubricant supply pump, a lubricant supply line, a pressure regulator, a coarse filter, a recirculation line, and a fine filter. The lubricant supply pump has at least a pump inlet and a pump outlet. The pump inlet is adapted to couple to a lubricant source and is further adapted to receive a drive torque. The lubricant supply pump is configured, upon receipt of the drive torque, to draw lubricant from the lubricant source into the pump inlet and discharge lubricant from the pump outlet. The lubricant supply line is coupled to the pump outlet to receive lubricant discharged therefrom and direct the received lubricant to a machine. The coarse filter is disposed in series in the lubricant supply line and is configured to remove, from the lubricant supplied to the lubricant supply line, particulate of at least a first dimension. The pressure regulator is coupled to the lubricant supply line and is configured to regulate lubricant pressure downstream of the coarse filter. The recirculation line has a fluid inlet coupled to the lubricant supply line downstream of the coarse filter and the pressure regulator, and a fluid outlet in fluid communication with the lubricant source. The recirculation line is configured to direct a fraction of the lubricant supplied to the lubricant supply line back to the lubricant source. The fine filter is disposed in series in the recirculation line and is configured to remove, from the lubricant in the recirculation line, particulate having at least a second dimension. The second dimension is less than the first dimension

In yet another exemplary embodiment, a method of filtering lubricant in a lubricant supply system includes directing lubricant from a lubricant source into and through a coarse filter that is configured to remove, from the lubricant, particulate of at least a first dimension. A fraction of the lubricant discharged from the coarse filter is directed into and through a fine filter that is configured to remove, from the fraction of lubricant, particulate having at least a second dimension that is less than the first dimension. Lubricant discharged from the fine filter is directed back to the lubricant source.

Furthermore, other desirable features and characteristics of the present invention will become apparent from the subsequent detailed description of the invention and the appended claims, taken in conjunction with the accompanying drawings and this background of the invention.

### BRIEF DESCRIPTION OF THE DRAWINGS

The present invention will hereinafter be described in conjunction with the following drawing figure, wherein like numerals denote like elements, and wherein:

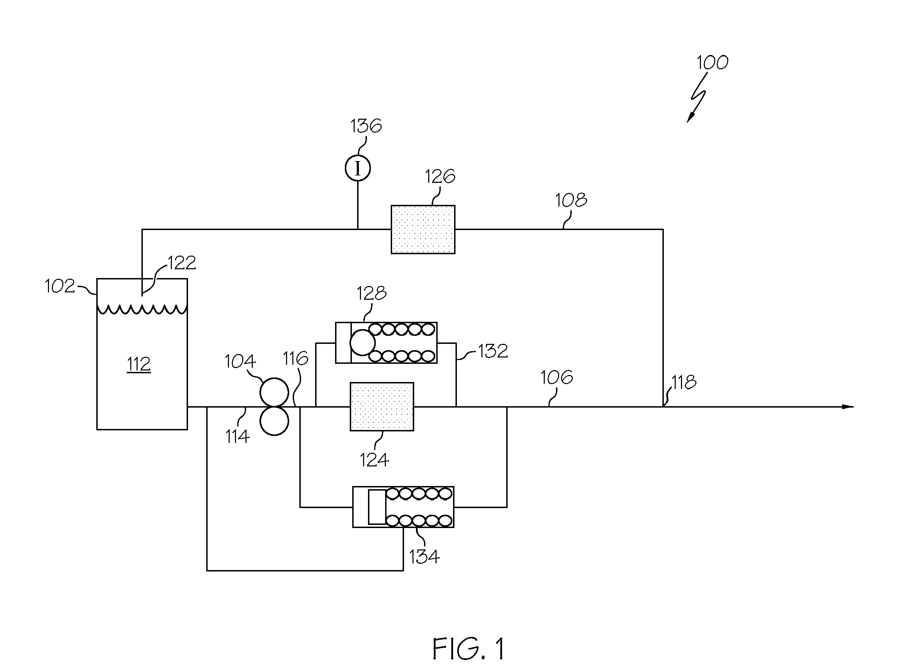

FIG. 1, which is the sole figure, is a schematic diagram of a lubricant supply system according to an exemplary embodiment of the present invention.

### DETAILED DESCRIPTION

The following detailed description is merely exemplary in nature and is not intended to limit the invention or its application and uses. Furthermore, there is no intention to be bound by any theory presented in the preceding background or the following detailed description. In this regard, although the system is depicted and described as supplying lubricant to a turbomachine, it will be appreciated that the invention is not so limited, and that the system and method described herein may be used to supply lubricant to any one of numerous rotating machines.

With reference now to FIG. 1, a schematic diagram of an exemplary lubricant supply system 100 is depicted, and includes a reservoir 102, a lubricant supply pump 104, a lubricant supply line 106, and a lubricant recirculation line 108. The reservoir 102 is used to store a supply of lubricant 112 such as, for example, oil or other suitable hydraulic fluid.

The lubricant supply pump 104 is configured to draw lubricant from the reservoir 102 and discharge lubricant to the lubricant supply line 106. In the depicted embodiment the lubricant supply pump 104 includes a pump inlet 114 and a pump outlet 116. The pump inlet 114 is coupled to the reservoir 102, and the pump outlet 116 is coupled to the lubricant supply line 106. The lubricant supply pump 104 is also coupled to receive a drive torque from a non-illustrated device and is configured, upon receipt of the drive torque, to draw lubricant 112 from the reservoir 102 into the pump inlet 114 and discharge the lubricant, at an increased pressure, from the pump outlet 116 into the lubricant supply line 106. It will be appreciated that the lubricant supply pump 104 could be implemented as any one of numerous types of centrifugal or positive displacement type pumps.

The lubricant supply line 106, among other potential functions, supplies the lubricant to one or more machines. It will be appreciated that the system 100 could be used to supply lubricant to any one or more of numerous types of machines. For example, if the lubrication supply system 100 is installed in an aircraft, then one particular non-limiting machine that could be supplied with the lubricant is a rotating turbomachine. No matter the particular machine(s) that is (are) supplied with lubricant, the lubricant is also supplied to the lubricant recirculation line 108.

The lubricant recirculation line 108 includes a fluid inlet 118 and a fluid outlet 122. The lubricant recirculation line fluid inlet 118 is coupled to the lubricant supply line 106, and the lubricant recirculation line fluid outlet 122 is in fluid communication with the lubricant reservoir 102. The lubricant recirculation line 108 is configured to direct a fraction of the lubricant that is supplied to the lubricant supply line 106 back to the lubricant reservoir 102. To do so, the lubricant recirculation line 108 may be adequately sized or include a control orifice, or both, so that only a desired maximum percentage of the lubricant that is supplied to the lubricant supply line 106 flows into the lubricant recirculation line 108 and back to the lubricant reservoir 102.

As FIG. 1 also depicts, a coarse lubricant filter 124 is disposed within the lubricant supply line 106, and a fine lubricant filter 126 is disposed within the lubricant recirculation line 108. The coarse lubricant filter 124 is disposed upstream of the rotating machine(s) and the lubricant recirculation line 108, and thus removes particulate or other debris that may be present in the lubricant before it is supplied to the rotating machine(s) and the lubricant recirculation line 108. The fine lubricant filter 126 removes particulate or other debris that may be present in the lubricant that is discharged from the coarse filter 124 and that flows into and through the lubricant recirculation line 108. The coarse lubricant filter 124 and the fine lubricant filter 126, as these nomenclatures connote, are configured to remove particulate or other debris of different dimensions. The specific dimensions of the particulate or other debris that each of these lubricant filters 124, 126 may remove may vary. However, the fine lubricant filter 126 is configured to remove particulate or other debris of dimensions that are less than the dimensions of particulate or other debris removed by the coarse lubricant filter 124. For example, the fine lubricant filter 126 may remove particulate or other debris that are 3 microns or less in size.

The system 100 also preferably includes a coarse filter bypass valve 128, a coarse filter bypass line 132, and a pressure regulator 134. The coarse filter bypass valve 128 is disposed in the coarse filter bypass line 132, which is coupled to the lubricant supply line 106 in parallel with the coarse lubricant filter 124. The coarse filter bypass valve 128 is moveable between a closed position and an open position. The coarse filter bypass valve 128 is configured such that it is normally in the closed position, but moves to an open position when a predetermined differential pressure exists across the coarse lubricant filter 124. Thus, if a sufficient amount of particulate or other debris is collected in the coarse lubricant filter 124 to generate a sufficiently high differential pressure, the coarse filter bypass valve 128 will open to ensure a sufficient flow of lubricant is maintained to the one or more machines.

The pressure regulator 134 is coupled to the lubricant supply line 106 upstream of the coarse lubricant filter 124 and downstream of the coarse lubricant filter 124 (but upstream of the lubricant recirculation line 108). The pressure regulator 134 is configured to regulate lubricant pressure downstream of the coarse lubricant filter 124. It will be appreciated that any one of numerous types of pressure regulators, now know or developed in the future, may be used.

The system 100 may also include one or more indicators 136 (for clarity, only one depicted in FIG. 1), which are used to indicate that the fine lubricant filter 126 may need to be serviced. It will be appreciated that the indicator 136 may comprise a timer or one or more sensors. If the indicator 136 comprises a timer then it may be configured to provide the indication that the fine lubricant filter 126 may need to be changed at preset time intervals. If the indicator 136 comprises one or more sensors, then the one or more indicators 136 are preferably configured to supply an indication of at least when lubricant flow through the fine lubricant filter 126 is less than a predetermined flow value. It will be appreciated that the one or more sensors may be variously implemented and may include, for example, various types of flow sensors, pressure switches, differential pressure sensors, or pressure sensors such as a pop-up indicator.

With the above-described system configuration it may be seen that the lubricant supply pump lubricant 104 draws lubricant from the reservoir 102, and discharges the lubricant into the lubricant supply line 106. The lubricant flows into and through the coarse lubricant filter 124, which removes relatively coarse particulate or other debris from the lubricant. A majority of the lubricant that is discharged from the coarse lubricant filter 124 is directed, via the lubricant supply line 106, to the one or more rotating machines. However, because the pressure regulator 134 maintains the predetermined system pressure, a portion of the lubricant that is discharged from the coarse lubricant filter 124 flows into the lubricant recirculation line 108, and into and through the fine lubricant filter 126. The fine lubricant filter 126 removes relatively fine particulate or other debris from the lubricant.

Over time the fine lubricant filter 126 may become clogged with the collected particulate or other debris. As a result, lubricant flow into the lubricant recirculation line 108, and into and through the fine lubricant filter 126, may decrease or fully cease. It will be appreciated that the decreased (or ceased) lubricant flow through the lubricant recirculation line 108, and the concomitant increased pressure drop across the fine lubricant filter 126, will have no effect on overall system operation. Because the pressure regulator 134 regulates the lubricant pressure downstream of the coarse lubricant filter 124, the pressure drop caused by the fine lubricant filter 126 will not result in additional backpressure to the system 100.

The lubricant supply system 100 described herein can improve the life of the various rotating machines to which it may supply lubricant by removing a relatively high percentage of fine particulate or other debris from the lubricant, while at the same time not increasing system pressures.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A lubricant supply system, comprising:
a lubricant supply line (114) adapted to receive lubricant (112) from a lubricant source (102) and direct the received lubricant to a machine;
a coarse filter (124) disposed in series in the lubricant supply line, the coarse filter configured to remove, from the lubricant supplied to the lubricant supply line, particulate of at least a first dimension;
a recirculation line (108) having a fluid inlet (118) coupled to the lubricant supply line downstream of the coarse filter and a fluid outlet (122) in fluid communication with the lubricant source, the recirculation line configured to direct a fraction of the lubricant supplied to the lubricant supply line back to the lubricant source; and
a fine filter (126) disposed in series in the recirculation line, the fine filter configured to remove, from the lubricant in the recirculation line, particulate having at least a second dimension, the second dimension less than the first dimension.

2. The system of Claim 1, further comprising:
a lubricant supply pump (104) connected to the lubricant supply line and configured to supply the lubricant from the lubricant source to the lubricant supply line.

3. The system of Claim 1, further comprising:
a pressure regulator (134) coupled to the lubricant supply line upstream of the recirculation line, the pressure regulator configured to regulate lubricant pressure downstream of the coarse filter.

4. The system of Claim 3, wherein the pressure regulator is coupled to the lubricant supply line upstream and downstream of the coarse filter.

5. The system of Claim 1, further comprising:
a filter bypass line (132) coupled to the lubricant supply line upstream of the coarse filter and downstream of the course filter; and
a filter bypass valve (128) disposed in series in the filter bypass line, the filter bypass valve configured to move from a normally-closed position to an open position when a predetermined differential pressure exists across the coarse filter.

6. The system of Claim 1, further comprising:
an indicator (136) coupled to the recirculation line and configured to supply an indication that the fine filter should be changed.

7. The system of Claim 6, wherein the indicator comprises a flow sensor.

8. The system of Claim 6, wherein the indicator comprises a timer.

9. The system of Claim 6, wherein the indicator comprises a differential pressure sensor.

10. The system of Claim 6, wherein the indicator comprises a pop-up indicator.
